# EUROPEAN PATENT APPLICATION

(11) **EP 4 297 159 A1**
(43) Date of publication of application: **27.12.2023**
(21) Application number: 22882606.1
(22) Date of filing: 27.09.2022
(51) Int. Cl.: H01M 50/24, H01M 50/244, H01M 50/249

(54) **HUMIDITY ADJUSTMENT MODULE, BATTERY MODULE, BATTERY BOX, AND POWER CONSUMPTION DEVICE**

(30) Priority: 18.10.2021 CN 202122506161 U
(71) Applicant: Contemporary Amperex Technology Co., Limited, Ningde City, Fujian 352100 (CN)
(72) Inventor: GUO, Haijian, Ningde, Fujian 352100 (CN); LIAO, Boxiang, Ningde, Fujian 352100 (CN)
(74) Representative: Ziebig Hengelhaupt Intellectual Property Attorneys Patentanwaltskanzlei PartGmbB
(86) International application number: PCT/CN2022/121910
(87) International publication number: WO 2023/065995

(57) **Abstract**

The present application discloses a humidity control module, a battery module, a battery box and an electrical apparatus. The humidity control module includes: a humidity control layer configured to absorb or release water vapor; a first gas-permeable layer arranged in a stacked manner on a surface of the humidity control layer, the first gas-permeable layer being capable of allowing the passage of the water vapor and preventing the passage of liquid water; a second gas-permeable layer arranged in a stacked manner on the surface of the first gas-permeable layer facing away from the humidity control layer, the second gas-permeable layer being capable of allowing the passage of the water vapor and the liquid water; and a fixing layer arranged on the side of the humidity control layer facing away from the first gas-permeable layer, and configured to fix the humidity control layer, the first gas-permeable layer and the second gas-permeable layer to a carrier.

## Description

### Cross-Reference to Related Application

The present application claims the priority of Chinese patent application no. 202122506161.6, entitled "HUMIDITY CONTROL MODULE, BATTERY MODULE, BATTERY BOX AND ELECTRICAL APPARATUS" and filed on October 18, 2021, the entire content of which is incorporated herein by reference.

### Technical Field

The present application relates to the technical field of batteries, and in particular to a humidity control module, a battery module, a battery box and an electrical apparatus.

### Background Art

As one of the core components of all-electric vehicles, a power battery is provided with a box body having many electrical components such as a battery module, copper bars, relays, and a BMS controller contained therein. The existence of these electrical components puts forward high requirements on the air humidity inside the box of the power battery.

If the air humidity inside the box of the power battery is too high, it is possible to cause corrosion of the electrical components and parts in the box for a long time, resulting in a reduced performance of the power battery. A more serious situation is that water vapor in the air will be condensed into liquid water on surfaces of the electrical components, causing short-circuiting of an internal circuit of the power battery and corrosion of some metal electrical components, thereby causing the power battery to lose its normal function and even causing safety risks.

At present, a battery box is dehumidified mainly by providing a complex drying apparatus or a dehumidification system in the industry. Although the above method can dehumidify and remove water vapor to some extent, the structure is complex and there is also a need for regular maintenance and replacement. In addition, the electrical components such as the battery module inside the battery box need a suitable humidity environment. However, the humidity inside the battery box cannot be well controlled in the above method.

### Summary of the Invention

The present application is intended to solve at least one of the technical problems existing in the prior art. Therefore, the present application provides a humidity control module, a battery module, a battery box and an electrical apparatus, which can automatically absorb water vapor from the battery box or release water vapor into the battery box, effectively adjusting the humidity inside the battery box, preventing short-circuiting of a circuit inside the battery box and corrosion of metal electrical components due to liquid water, and ensuring the stability of the structure and performance of the electrical components inside the battery box.

In a first aspect, the present application provides a humidity control module, including:
a humidity control layer configured to absorb or release water vapor;
a first gas-permeable layer arranged in a stacked manner on a surface of the humidity control layer, the first gas-permeable layer being capable of allowing the passage of the water vapor and preventing the passage of liquid water;
a second gas-permeable layer arranged in a stacked manner on the surface of the first gas-permeable layer facing away from the humidity control layer, the second gas-permeable layer being capable of allowing the passage of the water vapor and the liquid water; and
a fixing layer arranged on the side of the humidity control layer facing away from the first gas-permeable layer, and configured to fix the humidity control layer, the first gas-permeable layer and the second gas-permeable layer to a carrier.

The humidity control module according to embodiments of the first aspect of the present application has at least the following beneficial effects.

When the humidity control module of the present application is in use, the humidity control module may be integrally fixed to an outer surface of a battery module or an inner wall of a battery box by means of the fixing layer. When the humidity inside the battery box is high and the temperature is low, the water vapor inside the battery box will pass through the second gas-permeable layer and the first gas-permeable layer of the humidity control module in sequence because of its own diffusion, then comes into contact with the humidity control layer, and then is absorbed by the humidity control layer, thereby reducing the humidity inside the battery box, preventing short-circuiting of a circuit inside the battery box and corrosion of the battery module and other metal electrical components caused by a large amount of water vapor inside the battery box being condensed into liquid water due to low temperature, and ensuring the stability of the structure and performance of the electrical components inside the battery box. When the humidity inside the battery box is low and the temperature is high, the moisture on the humidity control layer absorbs the heat inside the battery box and is evaporated into water vapor, and the water vapor then passes through the first gas-permeable layer and the second gas-permeable layer in sequence and then diffuses into the internal space of the battery box, increasing the humidity inside the battery box to some extent, and also having the effect of reducing the temperature inside the battery box. In this humidity control module, by configuring the first gas-permeable layer as a structure capable of allowing the passage of the water vapor and preventing the passage of the liquid water, it is possible to prevent the direct contact between a small amount of liquid water inside the battery box and the humidity control layer affecting the normal function of the humidity control layer. In addition, in this humidity control module, by designing the second gas-permeable layer as a structure capable of allowing the passage of the water vapor and the liquid water, when the humidity inside the battery box is high and the temperature is low, the water vapor remaining on the humidity control layer passes through the first gas-permeable layer by means of diffusion, and is then condensed into liquid water on an inner surface of the second gas-permeable layer and absorbed by the second gas-permeable layer, not only preventing the water vapor remaining inside the humidity control module from entering the battery box, but also preventing the liquid water from flowing on the inner surface and an outer surface of the second gas-permeable layer, ensuring that the water vapor inside the battery box can be efficiently absorbed by the humidity control layer, and also reducing the probability of the water vapor being condensed on the electrical components. The humidity control module of the present application has a simple and ingenious structure. Through the cooperation of the humidity control layer, the first gas-permeable layer and the second gas-permeable layer, it is possible to automatically absorb the water vapor inside the battery box or release the water vapor into the battery box, effectively adjust the humidity inside the battery box, and also function to adjust the temperature inside the battery box to some extent with a high reliability. Through the absorption and release of the water vapor by the humidity control layer, the entire humidity control module has the effect of recycling.

In some embodiments of the present application, the humidity control module further includes an insulating isolation layer arranged in a stacked manner between the humidity control layer and the fixing layer, the insulating isolation layer being configured to prevent the passage of the water vapor, wherein the fixing layer is configured to fix the insulating isolation layer, the humidity control layer, the first gas-permeable layer and the second gas-permeable layer to the carrier. The provision of the insulating isolation layer can provide an insulation protection function, avoid the direct contact between the water vapor or the liquid water inside the humidity control layer and the electrical components inside the battery box, prevent the direct contact between the humidity control layer and the electrical components inside the battery box causing short-circuiting of the circuit of the electrical components, and also avoid the direct contact between the water vapor or the liquid water inside the humidity control layer and the fixing layer affecting the fixing function of the fixing layer.

In some embodiments of the present application, a perpendicular projection of the insulating isolation layer onto a plane where the humidity control layer is located covers the humidity control layer. In this way, the insulating isolation layer can completely cover the humidity control layer, so that the water vapor or the liquid water inside the humidity control layer can be completely isolated, ensuring that the fixing layer and the electrical components inside the battery box are in a dry state.

In some embodiments of the present application, the insulating isolation layer is an aluminum-plastic film layer. Due to the strong barrier property and moisture resistance of the aluminum-plastic film, the insulating isolation layer can effectively prevent the direct contact between the water vapor or the liquid water inside the humidity control layer and the electrical components inside the battery box. Due to the strong insulation property of the aluminum-plastic film, the insulating isolation layer can effectively prevent the direct contact between the humidity control layer and the electrical components inside the battery box causing short-circuiting of the circuit of the electrical components.

In some embodiments of the present application, the first gas-permeable layer and the fixing layer are connected as a whole through a hemming process, and the humidity control layer is arranged in a receiving space enclosed by the first gas-permeable layer and the fixing layer. In this way, the humidity control layer is arranged between the first gas-permeable layer and the fixing layer, so that it is possible to prevent the direct contact between the water vapor or the liquid water inside the battery box and the humidity control layer, and make the humidity control layer in a space having a relatively stable humidity. Therefore, the function of absorbing or releasing the water vapor of the humidity control layer is maintained in a relatively stable state, thereby making it easier to maintain the environment inside the battery box in a relatively stable, balanced state. In addition, the service life of the humidity control layer and the entire humidity control module can be prolonged.

In some embodiments of the present application, a perpendicular projection of the first gas-permeable layer onto the plane where the humidity control layer is located covers the humidity control layer. Through the above design, the first gas-permeable layer can completely cover the humidity control layer, so that a path of the liquid water entering the humidity control layer can be completely cut off, ensuring the normal function of the humidity control layer.

In some embodiments of the present application, a perpendicular projection of the first gas-permeable layer onto a plane where the second gas-permeable layer is located covers the second gas-permeable layer. Through the above design, the contact area between the first gas-permeable layer and the second gas-permeable layer is increased, so that the first gas-permeable layer covers the second gas-permeable layer in a stacked manner, ensuring that the water vapor inside the battery box needs to pass through the second gas-permeable layer and the first gas-permeable layer first before coming into contact with the humidity control layer and being absorbed by the humidity control layer. Moreover, the first gas-permeable layer completely blocks the liquid water on the second gas-permeable layer, further ensuring the normal function of the humidity control layer.

In some embodiments of the present application, the first gas-permeable layer is one of a non-woven fabric film or an expanded polytetrafluoroethylene film. The non-woven fabric film and the expanded polytetrafluoroethylene film both have strong strength and gas permeability, ensuring that a small volume of water vapor can efficiently pass through the first gas-permeable layer and then be absorbed by the humidity control layer.

In a second aspect, the present application provides a battery module, including: a battery module body; and a humidity control module arranged at an outer surface of the battery module body, wherein the humidity control module is a humidity control module as described above.

The battery module according to the embodiments of the second aspect of the present application has at least the following beneficial effects.

Thanks to the provision of the humidity control module as described above, during use of this battery module, humidity control modules may be arranged at different positions on the outer surface of the battery module body, so that it is possible to adjust the humidity at different positions on an outer surface of the battery module, so as to prevent the condensation of the water vapor on the outer surface of the battery module affecting the normal function of the battery module.

In a third aspect, the present application provides a battery box, including: a box body; at least one battery module arranged inside the box body; and at least one humidity control module arranged at an inner wall of the box body and/or an outer surface of the battery module, wherein the humidity control module is a humidity control module as described above.

The battery box according to the embodiments of the third aspect of the present application has at least the following beneficial effects.

Thanks to the provision of the humidity control module as described above, during use of this battery box, humidity control modules may be arranged at different positions on the outer surface of the battery module and at different positions on the inner wall of the box body of the battery box, so that it is possible to adjust the humidity inside the entire box body, avoiding the short-circuiting of the circuit inside the box body and the corrosion of the metal electrical components due to the liquid water, so as to ensure the stability of the structure and performance of the battery module and other electrical components inside the battery box.

In a fourth aspect, the present application further provides an electrical apparatus, including the battery module or battery box as described above.

The electrical apparatus according to the embodiments of the fourth aspect of the present application has at least the following beneficial effects.

Thanks to the provision of the battery module or battery box as described above, this electrical apparatus also has the same technical effects as the battery module or battery box as described above.

### Description of Drawings

In order to more clearly illustrate the technical solutions of the embodiments of the present application, the drawings to be used in the description of the embodiments of the present application will be described briefly below. Obviously, the drawings in the following description are merely some embodiments of the present application. For those skilled in the art, other drawings can also be obtained according to these drawings without any creative effort.
Fig. 1 is a schematic structural diagram of a humidity control module according to some embodiments of the present application;
Fig. 2 is a top view of a humidity control module according to some embodiments of the present application;
Fig. 3 is an exploded schematic structural diagram of a humidity control module according to some embodiments of the present application;
Fig. 4 is a schematic structural diagram of a battery box according to some embodiments of the present application;
Fig. 5 is a schematic structural diagram of a battery module according to some embodiments of the present application;
Fig. 6 is another schematic structural diagram of a battery box according to some embodiments of the present application;
Fig. 7 is an exploded schematic structural diagram of the battery box in Fig. 6; and
Fig. 8 is a schematic structural diagram of an electrical apparatus according to some embodiments of the present application.

In the drawings: Humidity control module 100; Humidity control layer 110; First gas-permeable layer 120; Second gas-permeable layer 130; Fixing layer 140; Insulating isolation layer 150; Battery module body 200; Box body 300; Upper case 310; Lower case 320; Electrical apparatus 400.

### Detailed Description

Features and exemplary embodiments of various aspects of the present application will be described in detail below. In the following detailed description, numerous specific details are set forth in order to provide a thorough understanding of the present application. It will be apparent, however, to those skilled in the art that the embodiments of the present application may be practiced without some of these specific details. The following description of the embodiments is only to provide a better understanding of the present application by showing examples of the present application.

In the description of the present application, it should be understood that the orientation or positional relationships indicated by the technical terms "upper", "lower", "front", "rear", "left", "right" and the like are based on the orientation or positional relationships shown in the drawings and are only for facilitating the description of the present application and simplifying the description, rather than indicating or implying that the device or element referred to must have a particular orientation or be constructed and operated in a particular orientation, and therefore cannot be interpreted as limiting the present application.

In the description of the embodiments of the present application, "several" means one or more, "a plurality of' means more than two, "greater than, less than, more than, etc.," are understood as not including the number itself, while "above, below, within, etc.," are understood as including the number itself. The terms "first" and "second" described are only used to distinguish technical features rather than being understood as indicating or implying relative importance or implicitly indicating the number of technical features indicated or implicitly indicating the precedence of the technical features indicated.

In the description of the embodiments of the present application, unless otherwise clearly defined, the terms such as "arrange", "mount" and "connect" shall be understood in a broad sense. Those skilled in the art can reasonably determine the specific meanings of the above terms in the present application in combination with the specific content of the technical solution.

It should be noted that the embodiments in the present application and the features of the embodiments can be combined with each other without conflict. The embodiments will be described in detail below with reference to the accompanying drawings.

At present, as one of the core components of all-electric vehicles, a power battery is provided with a box body having many electrical components such as a battery module, copper bars, relays, and a BMS controller contained therein. The existence of these electrical components puts forward high requirements on the air humidity inside the box of the power battery. If the air humidity inside the box of the power battery is too high, it is possible to cause corrosion of the electrical components and parts in the box for a long time, resulting in a reduced performance of the power battery. A more serious situation is that water vapor in the air will be condensed into liquid water on surfaces of the electrical components, causing short-circuiting of an internal circuit of the power battery and corrosion of some metal electrical components, thereby causing the power battery to lose its normal function and even causing safety risks.

At present, a battery box is dehumidified mainly by providing a complex drying apparatus or a dehumidification system in the industry. Although the above method can dehumidify and remove water vapor to some extent, the structure is complex and there is also a need for regular maintenance and replacement. In addition, the electrical components such as the battery module inside the battery box need a suitable humidity environment. However, the humidity inside the battery box cannot be well controlled in the above method.

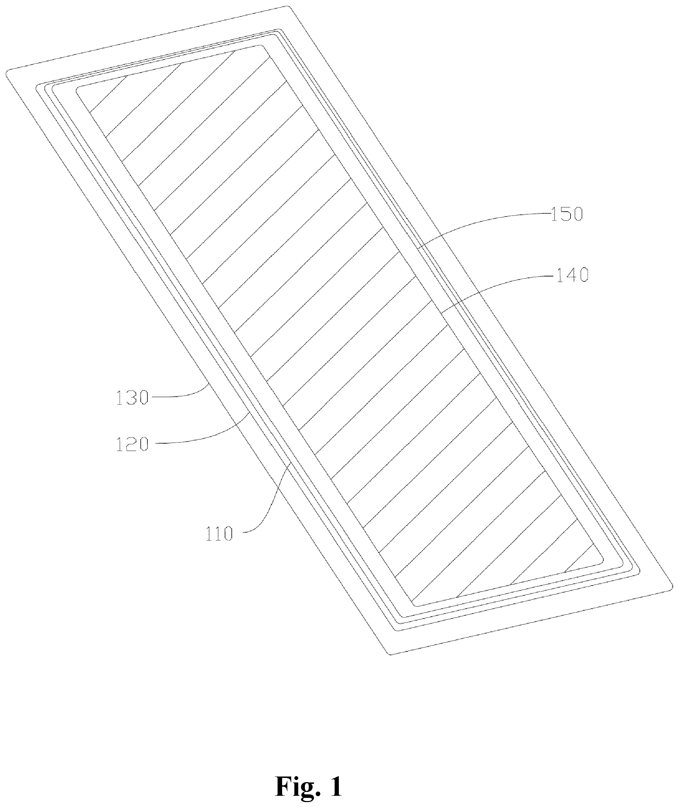

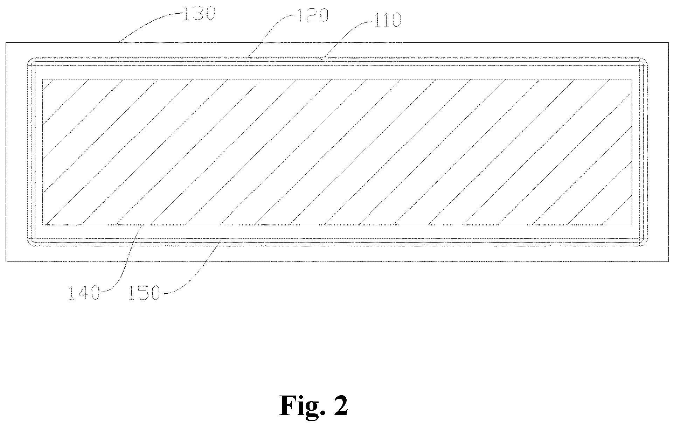

Referring to Figs. 1, 2, 3 and 4, in order to solve the problem in the prior art that the humidity inside the battery box cannot be well regulated, the present application provides a humidity control module 100, which includes a humidity control layer 110, a first gas-permeable layer 120, a second gas-permeable layer 130 and a fixing layer 140. The humidity control layer 110 is configured to absorb or release water vapor. The first gas-permeable layer 120 is arranged in a stacked manner on a surface of the humidity control layer 110, and the first gas-permeable layer 120 can allow the passage of the water vapor and prevent the passage of liquid water. The second gas-permeable layer 130 is arranged in a stacked manner on the surface of the first gas-permeable layer 120 facing away from the humidity control layer 110, and the second gas-permeable layer 130 can allow the passage of the water vapor and the liquid water. The fixing layer 140 is arranged on the side of the humidity control layer 110 away from the first gas-permeable layer 120, and the fixing layer 140 is configured to fix the humidity control layer 110, the first gas-permeable layer 120 and the second gas-permeable layer 130 to a carrier.

In the technical solution of the present application, the carrier may be a battery cell or a cell core, a battery module, a battery box body and other structures inside the battery box. Of course, the carrier may also be other electrical box bodies or electrical cabinets having electrical elements or circuit structures, and the specific structure of the carrier is thus not limited.

It should be understood that the specific shape of the humidity control layer 110 is not limited, and the humidity control layer 110 is preferably a block- or sheet-like structure; and the humidity control layer 110 is also not limited, and can be selected according to the application requirements. The humidity control layer 110 is internally provided with a functional material capable of sensing and adjusting the relative humidity of the ambient air. The functional material may be optionally an acrylic resin and a superabsorbent polymer mixed inside the acrylic resin. The two can form a superabsorbent polyester fiber material. The operating principle of the functional material in the humidity control layer 110 lies in that the superabsorbent polymer is in the form of a ternary bridging molecular chain in the acrylic resin; due to the effect of hydrophilic groups in the superabsorbent polymer, the functional material in the humidity control layer 110 easily absorbs water molecules from the ambient air into the body of the humidity control layer; after the water molecules enter the body of the acrylic resin, ionized groups on molecular chains of the acrylic resin are ionized in the water, and the electrostatic repulsion between the same ions makes the polymer chains stretch and swell, further causing the water molecules to be absorbed into the body of the acrylic resin to realize the humidity absorption function of the humidity control layer 110; and after the water molecules enter the body of the acrylic resin, the ion concentration difference between solutions inside and outside the body of the acrylic resin forms a reverse osmosis pressure, making it easier for the water molecules to enter the body of the acrylic resin. Therefore, the higher the relative humidity of the ambient air, the stronger the humidity absorption capacity of the humidity control layer 110. Conversely, when the relative humidity of the ambient air is low, the ion concentration difference between the solutions inside and outside the body of the acrylic resin changes, and the water molecules inside the body of the acrylic resin will be released automatically due to the osmotic pressure, so as to realize the humidity release function of the humidity control layer 110.

Apparently, in the technical solution of the present application, the humidity control layer 110 can realize the humidity control process without energy consumption in the battery box body, without the need for an external power source.

In the technical solution of the present application, the shapes and thicknesses of the first gas-permeable layer 120, the second gas-permeable layer 130 and the fixing layer 140 are not limited. Optionally, in order to reduce the overall thickness and overall weight of the humidity control module, the sum of the thicknesses of the first gas-permeable layer 120 and the second gas-permeable layer 130 is controlled between 0.13 mm and 0.15 mm, and the thickness of the fixing layer 140 is controlled between 0.09 mm and 0.11 mm. Moreover, in order to ensure that the first gas-permeable layer 120 and the second gas-permeable layer 130 have a strong enough gas-permeable function, the gas permeabilities of the first gas-permeable layer 120 and the second gas-permeable layer 130 are optionally 2000 g/m2 * 24h.

In the technical solution of the present application, the fixing layer 140 may be a bonding film with a strong viscosity, and the fixing layer 140 is optionally a double-sided tape, so that the humidity control layer 110, the first gas-permeable layer 120 and the second gas-permeable layer 130 can be stably fixed to the carrier to prevent the entire humidity control module from falling off from the carrier. Of course, the fixing layer 140 may also be of a snap-fit or hook structure such that the humidity control layer 110, the first gas-permeable layer 120 and the second gas-permeable layer 130 are stably fixed to the carrier. The specific structure of the fixing layer 140 is not limited.

When the humidity control module of the present application is in use, the humidity control module 100 may be integrally fixed to an outer surface of a battery module or an inner wall of a battery box by means of the fixing layer 140. When the humidity inside the battery box is high and the temperature is low, the water vapor inside the battery box will pass through the second gas-permeable layer 130 and the first gas-permeable layer 120 of the humidity control module in sequence because of its own diffusion, then comes into contact with the humidity control layer 110, and then is absorbed by the humidity control layer 110, thereby reducing the humidity inside the battery box, preventing short-circuiting of a circuit inside the battery box and corrosion of the battery module and other metal electrical components caused by a large amount of water vapor inside the battery box being condensed into liquid water due to low temperature, and ensuring the stability of the structure and performance of the electrical components inside the battery box.

When the humidity inside the battery box is low and the temperature is high, the moisture on the humidity control layer 110 absorbs the heat inside the battery box and is evaporated into water vapor, and the water vapor then passes through the first gas-permeable layer 120 and the second gas-permeable layer 130 in sequence and then diffuses into the internal space of the battery box, increasing the humidity inside the battery box to some extent, and also having the effect of reducing the temperature inside the battery box.

In this humidity control module 100, by configuring the first gas-permeable layer 120 as a structure capable of allowing the passage of the water vapor and preventing the passage of the liquid water, it is possible to prevent the direct contact between a small amount of liquid water inside the battery box and the humidity control layer 110 affecting the normal function of the humidity control layer 110. In addition, in this humidity control module 100, by designing the second gas-permeable layer 130 as a structure capable of allowing the passage of the water vapor and the liquid water, when the humidity inside the battery box is high and the temperature is low, the water vapor remaining on the humidity control layer 110 passes through the first gas-permeable layer 120 by means of diffusion, and is then condensed into liquid water on an inner surface of the second gas-permeable layer 130 and absorbed by the second gas-permeable layer 130, not only preventing the water vapor remaining inside the humidity control module from entering the battery box, but also preventing the liquid water from flowing on the inner surface and an outer surface of the second gas-permeable layer 130, ensuring that the water vapor inside the battery box can be efficiently absorbed by the humidity control layer 110, and also reducing the probability of the water vapor being condensed on the electrical components.

The humidity control module of the present application has a simple and ingenious structure. Through the cooperation of the humidity control layer 110, the first gas-permeable layer 120 and the second gas-permeable layer 130, it is possible to automatically absorb the water vapor inside the battery box or release the water vapor into the battery box, effectively adjust the humidity inside the battery box, and also function to adjust the temperature inside the battery box to some extent with a high reliability. Through the absorption and release of the water vapor by the humidity control layer 110, the entire humidity control module has the effect of recycling. The arrangement of the second gas-permeable layer 130 also effectively strengthens the structural strength of the entire humidity control module, functions to protect the first gas-permeable layer 120, prevents the direct contact between an external pointed object and the first gas-permeable layer 120 damaging the first gas-permeable layer 120 and effecting the normal function of the first gas-permeable layer 120, and ensures the stability of the structure and function of the first gas-permeable layer 120.

Referring to Figs. 1 to 3 again, in some embodiments of the present application, the humidity control module 100 further includes an insulating isolation layer 150. The insulating isolation layer 150 is arranged in a stacked manner between the humidity control layer 110 and the fixing layer 140. The insulating isolation layer 150 is configured to prevent the passage of water vapor. The fixing layer 140 is configured to fix the insulating isolation layer 150, the humidity control layer 110, the first gas-permeable layer 120 and the second gas-permeable layer 130 to the carrier. It should be understood that the insulating isolation layer 150, the humidity control layer 110 and the fixing layer 140 are all optionally of rectangular sheet-like structures, and the thicknesses of the four may be adaptively selected and adjusted according to actual use needs. In other embodiments, it is enough that the structure of the insulating isolation layer 150 can be stably sandwiched between the fixing layer 140 and the humidity control layer 110, and its two opposite side faces are respectively kept in a state of being face-to-face attached to the humidity control layer 110 and the fixing layer 140. It should be understood that the insulating isolation layer 150 has strong insulation and gas-tightness properties, and the provision of the insulating isolation layer 150 can provide an insulation protection function, effectively avoid the direct contact between the water vapor or the liquid water inside the humidity control layer 110 and the electrical components inside the battery box, prevent the direct contact between the humidity control layer 110 and the electrical components inside the battery box causing short-circuiting of the circuit of the electrical components, and also avoid the direct contact between the water vapor or the liquid water inside the humidity control layer 110 and the fixing layer 140 affecting the fixing function of the fixing layer 140.

In some embodiments of the present application, a perpendicular projection of the insulating isolation layer 150 onto a plane where the humidity control layer 110 is located covers the humidity control layer 110. In this way, the insulating isolation layer 150 can completely cover the humidity control layer 110,so that the water vapor or the liquid water inside the humidity control layer 110 can be completely isolated, ensuring that the fixing layer 140 and the electrical components inside the battery box are in a dry state.

In some embodiments of the present application, the insulating isolation layer 150 is an aluminum-plastic film layer. Due to the strong barrier property and moisture resistance of the aluminum-plastic film, the insulating isolation layer 150 can effectively prevent the direct contact between the water vapor or the liquid water inside the humidity control layer 110 and the electrical components inside the battery box. Due to the strong insulation property of the aluminum-plastic film, the insulating isolation layer 150 can effectively prevent the direct contact between the humidity control layer 110 and the electrical components inside the battery box causing short-circuiting of the circuit of the electrical components. When the insulating isolation layer 150 is an aluminum-plastic film layer, the fixing layer 140 may be a double-sided tape layer. Thanks to the high smoothness of the aluminum-plastic film, a release film of the double-sided tape can be seamlessly attached to the aluminum-plastic film, effectively avoiding the direct contact between the water vapor or the liquid water of the humidity control layer 110 and the double-sided tape layer affecting the normal pasting function of the double-sided tape layer.

In some embodiments of the present application, the first gas-permeable layer 120 and the fixing layer 140 are connected as a whole through a hemming process, and the humidity control layer 110 is arranged in a receiving space enclosed by the first gas-permeable layer 120 and the fixing layer 140. In this way, the humidity control layer 110 is arranged between the first gas-permeable layer 120 and the fixing layer 140, so that it is possible to prevent the direct contact between the water vapor or the liquid water inside the battery box and the humidity control layer 110, and make the humidity control layer 110 in a space having a relatively stable humidity. Therefore, the function of absorbing or releasing the water vapor of the humidity control layer 110 is maintained in a relatively stable state, thereby making it easier to maintain the environment inside the battery box in a relatively stable, balanced state. In addition, the service life of the humidity control layer 110 and the entire humidity control module can be prolonged.

Of course, in some other embodiments, the first gas-permeable layer 120 and the second gas-permeable layer 130 are both of film layer structures and the two are stacked into one piece through a hot-pressing process, the first gas-permeable layer 120 and the second gas-permeable layer 130 of one piece and the insulating isolation layer 150 are connected as an integral structure through a hemming process, and the humidity control layer 110 is sandwiched in the receiving space enclosed by the first gas-permeable layer 120 and the insulating isolation layer 150, so that the first gas-permeable layer 120, the second gas-permeable layer 130 and the insulating isolation layer 150 jointly enclose the humidity control layer 110 to prevent contact between the liquid water in the external environment and the humidity control layer 110 affecting the normal humidity absorption and release functions of the humidity control layer 110.

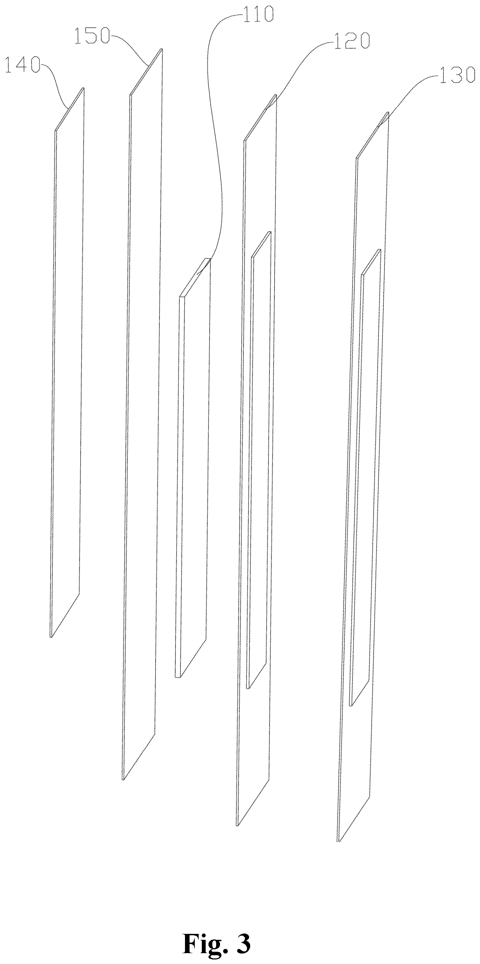

Referring to Fig. 3 again, in some embodiments of the present application, a perpendicular projection of the first gas-permeable layer 120 onto the plane where the humidity control layer 110 is located covers the humidity control layer 110. Through the above design, the first gas-permeable layer 120 can completely cover the humidity control layer 110, so that a path of the liquid water entering the humidity control layer 110 can be completely cut off, ensuring the normal function of the humidity control layer 110.

Similarly, in some embodiments of the present application, a perpendicular projection of the first gas-permeable layer 120 onto a plane where the second gas-permeable layer 130 is located covers the second gas-permeable layer 130. Through the above design, the contact area between the first gas-permeable layer 120 and the second gas-permeable layer 130 is increased, so that the first gas-permeable layer 120 covers the second gas-permeable layer 130 in a stacked manner, ensuring that the water vapor inside the battery box needs to pass through the second gas-permeable layer 130 and the first gas-permeable layer 120 first before coming into contact with the humidity control layer 110 and being absorbed by the humidity control layer 100. Moreover, the first gas-permeable layer 120 completely blocks the liquid water on the second gas-permeable layer 130, further ensuring the normal function of the humidity control layer 100.

In some embodiments of the present application, the first gas-permeable layer 120 is one of a non-woven fabric film or an expanded polytetrafluoroethylene film. It can be understood that the non-woven fabric film and the expanded polytetrafluoroethylene film both have strong strength and gas permeability, ensuring that a small volume of water vapor can efficiently pass through the first gas-permeable layer 120 and then be absorbed by the humidity control layer 110, and that the humidity control layer 110 efficiently releases the water vapor into the ambient air at a relatively low ambient relative humidity, thereby achieving efficient adjustment of the relative humidity in the ambient air. Of course, the first gas-permeable layer 120 may also be another functional film that can allow the passage of the water vapor and prevent the passage of the liquid water, and its specific structure is not limited.

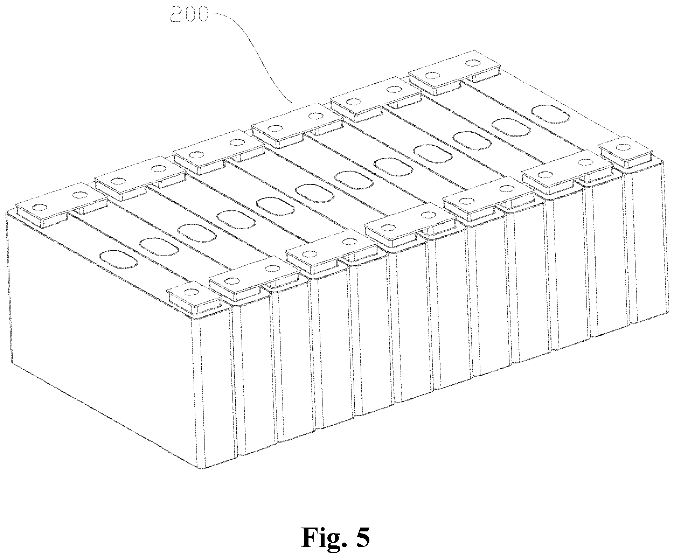

Referring to Fig. 5, the present application also provides a battery module, including a battery module body 200 and a humidity control module arranged at an outer surface of the battery module body 200. The humidity control module is a humidity control module as described above.

It should be understood that the battery module body 200 may be square, cylindrical or in other shapes. The battery module body 200 is internally provided with a plurality of battery cells arranged vertically and horizontally. The shape of the battery cells is not limited and may be square, cylindrical or in other shapes.

Thanks to the provision of the humidity control module 100 as described above, during use of this battery module, humidity control modules 100 may be arranged at different positions on the outer surface of the battery module body 200, so that it is possible to adjust the humidity at different positions on an outer surface of the battery module, so as to prevent the condensation of the water vapor on the outer surface of the battery module affecting the normal function of the battery module, preventing the flowing of the liquid water condensed by the water vapor on the outer surface of the battery module into the battery module affecting the normal function of the battery cells.

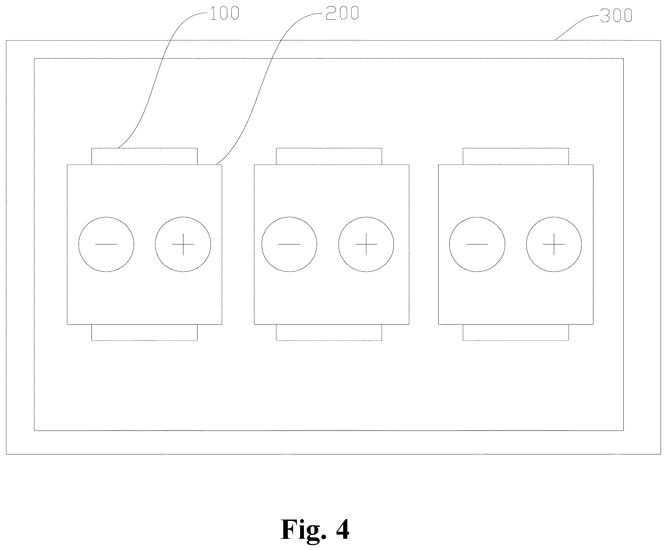

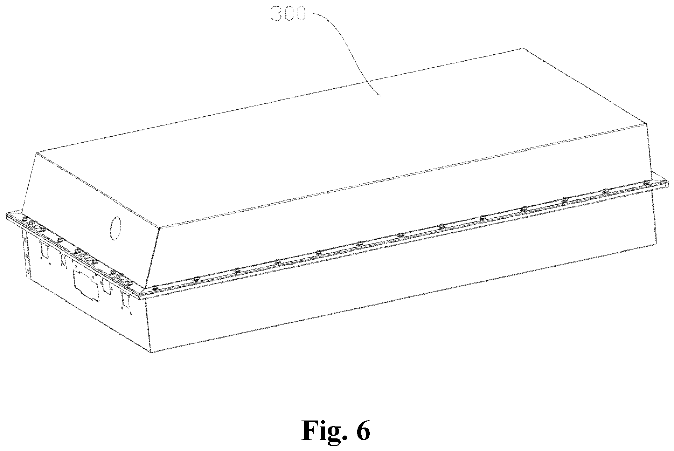

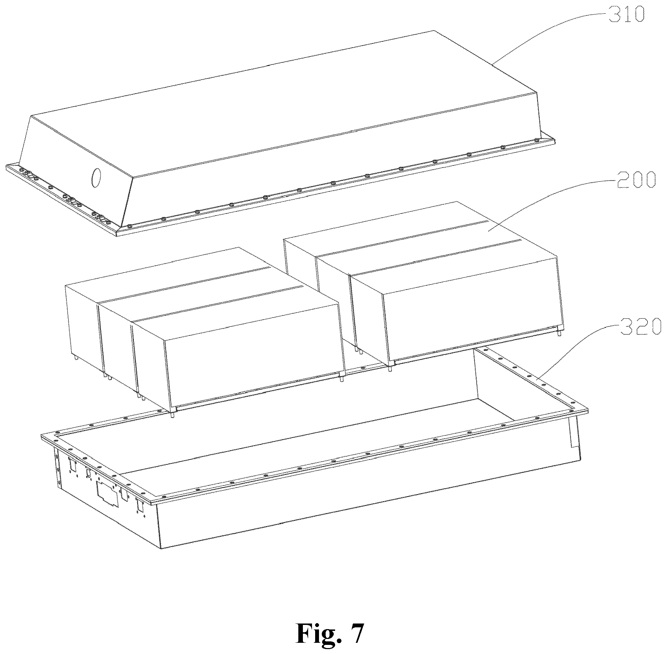

Referring to Figs. 4, 5, 6 and 7, the present application also provides a battery box, including a box body 300, at least one battery module arranged inside the box body 300, and at least one humidity control module arranged at an inner wall of the box body and/or an outer surface of the battery module. The humidity control module is a humidity control module as described above.

Thanks to the provision of the humidity control module 100 as described above, during use of this battery box, humidity control modules 100 may be arranged at different positions on the outer surface of the battery module and at different positions on the inner wall of the box body 300 of the battery box, so that it is possible to adjust the humidity inside the entire box body, avoiding the short-circuiting of the circuit inside the box body and the corrosion of the metal electrical components due to the liquid water, so as to ensure the stability of the structure and performance of the battery module and other electrical components inside the battery box.

Specifically, in order to facilitate the maintenance and replacement of the battery module, the box body 300 is formed by detachably assembling an upper case 310 and a lower case 320, and the upper case 310 and the lower case 320 are assembled to enclose a cavity for receiving the battery module.

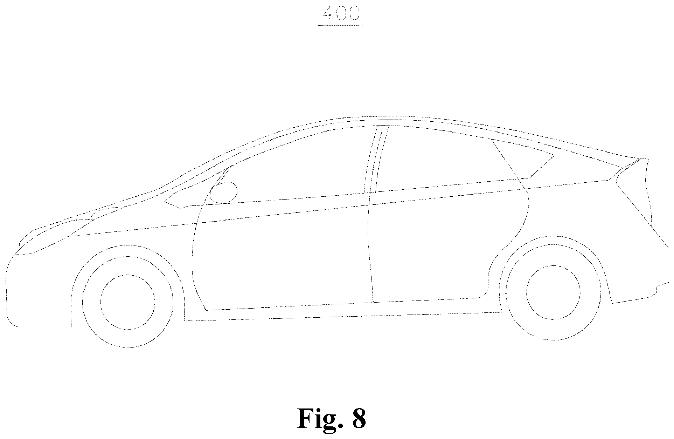

In addition, referring to Fig. 8, the present application provides an electrical apparatus 400. The electrical apparatus 400 includes the battery module or battery box as described above. The electrical apparatus may be, but is not limited to, a mobile phone, a tablet, a laptop, an electric toy, an electric tool, a battery vehicle, an electric vehicle, a ship, a spacecraft, etc. The electric toy may include a fixed or mobile electric toy, such as a game console, an electric car toy, an electric ship toy, and an electric airplane toy. The spacecraft may include an airplane, a rocket, a space shuttle, a spaceship, etc.

Thanks to the provision of the battery module or battery box as described above, this electrical apparatus also has the same technical effects as the battery module or battery box as described above. That is, the humidity of the battery module or the battery box in the electrical apparatus can be effectively adjusted by the humidity control module 100.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments can still be modified, or some or all of the technical features therein can be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A humidity control module, comprising:
a humidity control layer configured to absorb or release water vapor;
a first gas-permeable layer arranged in a stacked manner on a surface of the humidity control layer, the first gas-permeable layer being capable of allowing the passage of the water vapor and preventing the passage of liquid water;
a second gas-permeable layer arranged in a stacked manner on the surface of the first gas-permeable layer facing away from the humidity control layer, the second gas-permeable layer being capable of allowing the passage of the water vapor and the liquid water; and
a fixing layer arranged on the side of the humidity control layer facing away from the first gas-permeable layer, and configured to fix the humidity control layer, the first gas-permeable layer and the second gas-permeable layer to a carrier.

2. The humidity control module according to claim 1, further comprising:
an insulating isolation layer arranged in a stacked manner between the humidity control layer and the fixing layer, the insulating isolation layer being configured to prevent the passage of the water vapor;
wherein the fixing layer is configured to fix the insulating isolation layer, the humidity control layer, the first gas-permeable layer and the second gas-permeable layer to the carrier.

3. The humidity control module according to claim 2, wherein a perpendicular projection of the insulating isolation layer onto a plane where the humidity control layer is located covers the humidity control layer.

4. The humidity control module according to claim 2 or 3, wherein the insulating isolation layer is an aluminum-plastic film layer.

5. The humidity control module according to any one of claims 1 to 4, wherein the first gas-permeable layer and the fixing layer are connected as a whole through a hemming process, and the humidity control layer is arranged in a receiving space enclosed by the first gas-permeable layer and the fixing layer.

6. The humidity control module according to any one of claims 1 to 5, wherein a perpendicular projection of the first gas-permeable layer onto the plane where the humidity control layer is located covers the humidity control layer.

7. The humidity control module according to claim 6, wherein a perpendicular projection of the first gas-permeable layer onto a plane where the second gas-permeable layer is located covers the second gas-permeable layer.

8. The humidity control module according to any one of claims 1 to 7, wherein the first gas-permeable layer is one of a non-woven fabric film or an expanded polytetrafluoroethylene film.

9. A battery module, comprising:
a battery module body; and
a humidity control module arranged at an outer surface of the battery module body, wherein the humidity control module is a humidity control module of any one of claims 1 to 8.

10. A battery box, comprising:
a box body;
at least one battery module arranged inside the box body; and
at least one humidity control module arranged at an inner wall of the box body and/or an outer surface of the battery module, wherein the humidity control module is a humidity control module of any one of claims 1 to 8.

11. An electrical apparatus, comprising a battery module of claim 9 or a battery box of claim 10.
